# EUROPÄISCHE PATENTANMELDUNG

(11) **EP 2 570 202 A1**
(43) Veröffentlichungstag der Anmeldung: **20.03.2013**
(21) Anmeldenummer: 11290412.3
(22) Anmeldetag: 15.09.2011
(51) Int. Cl.: B21C 37/08, B23K 9/167

(54) **Vorrichtung zur kontinuierlichen Herstellung von Rohren aus Metall**

(71) Anmelder: Nexans, 75008 Paris (FR)
(72) Erfinder: Egerer, Ralf, 38723 Seesen (DE); Schulz, Holger, 30167 Hannover (DE)
(74) Vertreter: Döring, Roger

(57) **Zusammenfassung**

Es wird eine Vorrichtung zur kontinuierlichen Herstellung von Rohren aus Metall angegeben, welche eine Formungseinheit (4) zum Formen eines Rohres mit einem in Längsrichtung verlaufenden Schlitz aus einem längseinlaufenden Metallband, eine Schweißeinrichtung (7) zum Verschweißen der am Schlitz des Rohres aneinander liegenden Kanten des Metallbandes und eine Abzugseinrichtung zum Ziehen des nach dem Schweißen rundum geschlossenen Rohres (9) in seiner Längsrichtung aufweist. Die Schweißeinrichtung (7) besteht aus mindestens zwei getrennten, in Abzugsrichtung des Rohres (9) mit Abstand zueinander angeordneten Schweißköpfen (12,13) mit jeweils mindestens einer nicht abbrennenden Elektrode.

## Beschreibung

Die Erfindung bezieht sich auf eine Vorrichtung zur kontinuierlichen Herstellung von Rohren aus Metall, welche eine Formungseinheit zum Formen eines Rohres mit einem in Längsrichtung verlaufenden Schlitz aus einem längseinlaufenden Metallband, eine Schweißeinrichtung zum Verschweißen der am Schlitz des Rohres aneinander liegenden Kanten des Metallbandes und eine Abzugseinrichtung zum Ziehen des nach dem Schweißen rundum geschlossenen Rohres in seiner Längsrichtung aufweist (EP 1 604 768 B1).

Derartige Vorrichtungen werden zur kontinuierlichen Herstellung von Rohren aus unterschiedlichen Metallen eingesetzt. Sie bestehen beispielsweise aus Stahl, insbesondere Edelstahl, Kupfer oder einer Kupferlegierung sowie Aluminium oder einer Aluminiumlegierung. Solche Rohre, die nach dem Verschweißen auch mit einer quer zu ihrer Längsrichtung verlaufenden Wellung versehen sein können, werden beispielsweise zum Transport von Fluiden eingesetzt. Sie können aber auch als Schutzrohre von elektrischen und/oder optischen Kabeln, als Leiter von Hochfrequenzkabeln oder für Kryostate für supraleitfähige Kabel eingesetzt werden, durch welche ein tiefgekühltes Medium geleitet wird.

Bei der bekannten Vorrichtung nach der eingangs erwähnten EP 1 604 768 B 1 wird ein Metallband von einem Bandvorrat abgezogen und einer Formkonen bzw. Formrollen aufweisenden Formvorrichtung zugeführt. In der Formvorrichtung wird das Band zu einem Rohr mit einem in Längsrichtung verlaufenden Schlitz geformt, an dem die beiden Kanten des Randes aneinander liegen. Der Schlitz wird anschließend mit kontinuierlichem Vorschub in einer Schweißeinrichtung unter Schutzgas verschweißt, so daß ein rundum geschlossenes Rohr vorliegt. Ein dabei eingesetztes Schweißverfahren ist beispielsweise das WIG (Wolfram-Inert-Gas)-Verfahren. Als Schweißeinrichtung ist bei dieser Vorrichtung ein Schweißkopf mit zwei nicht abbrennenden Elektroden eingesetzt, die mit entsprechender räumlicher Zuordnung auf die gleiche Schweißstelle gerichtet sind. Die in der Schweißeinrichtung erzeugte Schweißnaht wird durch das Material des Metallbandes selbst erzeugt, das durch die im Einsatz befindliche Elektrode in den schmelzflüssigen Zustand überführt wird. Es ist immer nur eine Elektrode im Einsatz. Wenn eine Elektrode abgenutzt ist, wird auf die andere, bis dahin in Wartestellung befindliche Elektrode umgeschaltet. Die abgenutzte Elektrode kann dann ohne Unterbrechung des Betriebes ausgetauscht werden. Der Einsatz dieser Vorrichtung ist auf relativ niedrige Stromstärken beschränkt, die maximal für handelsübliche Elektroden eingesetzt werden können.

Der Erfindung liegt die Aufgabe zugrunde, die eingangs geschilderte Vorrichtung so weiterzubilden, daß sie zum Verschweißen von Metallbändern beliebigen Materials und beliebiger Dicke auch mit erhöhter Stromstärke eingesetzt werden kann.

Diese Aufgabe wird gemäß der Erfindung dadurch gelöst, daß die Schweißeinrichtung aus mindestens zwei getrennten, in Abzugsrichtung des Rohres mit Abstand zueinander angeordneten Schweißköpfen mit jeweils mindestens einer nicht abbrennenden Elektrode besteht.

Diese Vorrichtung ist variabel für unterschiedliche Stromstärken einsetzbar, so daß Metallbänder aus unterschiedlichen Materialien und mit unterschiedlichen Wandstärken verschweißt werden können. Sie ermöglicht unabhängig von der Anzahl der pro Schweißkopf eingesetzten Elektroden eine unterbrechungsfreie kontinuierliche Fertigung. Jeder der Schweißköpfe kann gegebenenfalls mit nur einer Elektrode, oder bei erhöhter Stromstärke mit zwei auf die gleiche Schweißstelle gerichteten Elektroden oder bei weiter erhöhter Stromstärke mit drei Elektroden ausgerüstet sein, die ebenfalls auf die gleiche Schweißstelle gerichtet sind. Wenn die Elektrode bzw. Elektroden des einen Schweißkopfes abgenutzt ist bzw. sind, wird der andere Schweißkopf in Betrieb genommen. Das soll bereits so rechtzeitig erfolgen, daß die kontinuierliche Fertigung nicht unterbrochen werden muß. Die den Schlitz des Rohres verschließende Schweißnaht ist dann gegebenenfalls auf einer variablen Länge doppelt ausgeführt. Das stört jedoch nicht, sondern erhöht sogar die Sicherheit, daß die Schweißnaht dicht verschlossen ist.

Ein Ausführungsbeispiel des Erfindungsgegenstandes ist in den Zeichnungen dargestellt.

Es zeigen:
Fig. 1 schematisch eine Vorrichtung nach der Erfindung zur kontinuierlichen Herstellung eines Rohres.
Fig. 2 einen Schnitt durch Fig. 1 längs der strichpunktierten Linie II in vergrößerter Darstellung.
Fig. 3 einen Schnitt durch Fig. 1 längs der strichpunktierten Linie III in ebenfalls vergrößerter Darstellung.
Fig. 4 eine in der Vorrichtung nach Fig. 1 verwendbare Schweißeinrichtung.

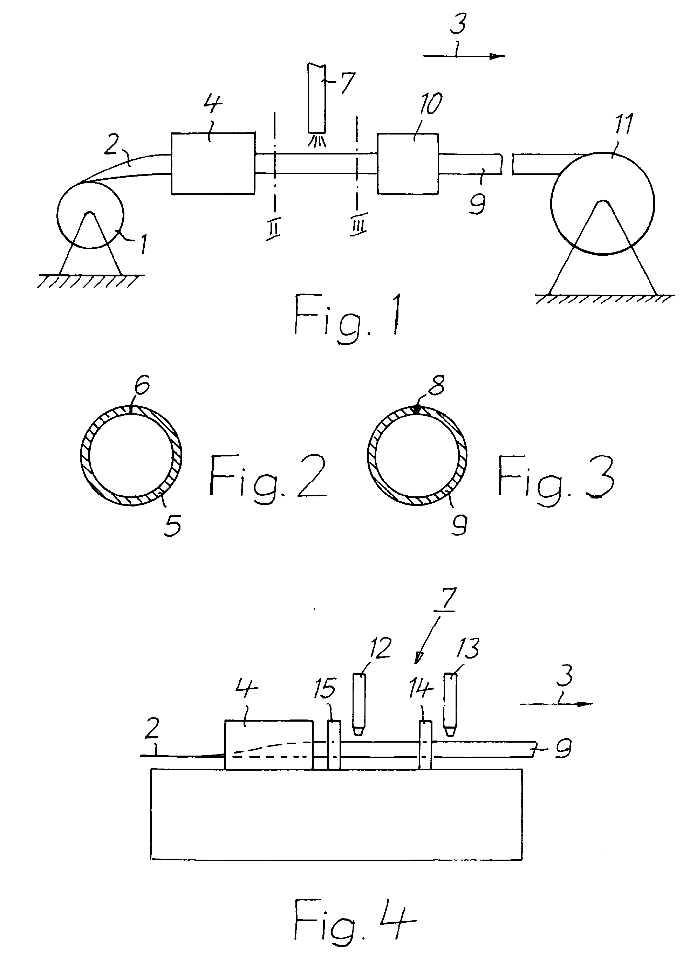

Von einer Spule 1 wird gemäß Fig. 1 ein beispielsweise aus Edelstahl bestehendes Metallband 2 in Richtung des Pfeiles 3 abgezogen und einer Formungseinheit 4 zugeführt. In der an sich bekannten Formungseinheit 4 können beispielsweise Formrollen enthalten sein, durch welche das längseinlaufende Metallband 2 zu einem Rohr 5 mit einem in seiner Längsrichtung verlaufenden Schlitz 6 geformt wird, an dem die beiden Kanten des Metallbandes 2 aneinander liegen (Fig. 2).

Das am Schlitz 6 noch offene Rohr 5 durchläuft dann eine Schweißeinrichtung 7, in welcher der Schlitz 6 durch eine Schweißnaht 8 verschlossen wird, so daß ein rundum geschlossenes Rohr 9 gebildet ist. Das Rohr 9 wird mittels einer Abzugseinrichtung 10 in Richtung des Pfeiles 3 gezogen. Es kann abschließend auf eine Spule 11 aufgewickelt werden.

Der Aufbau der Schweißeinrichtung 7 geht in genauerer Darstellung beispielsweise für eine in bevorzugter Ausführungsform zwei Schweißköpfe aufweisende Vorrichtung aus Fig. 4 hervor:

Die in Fig. 4 schematisch dargestellte Schweißeinrichtung 7 hat zwei Schweißköpfe 12 und 13, die in der durch den Pfeil 3 gekennzeichneten Abzugsrichtung des Rohres 9 getrennt voneinander angeordnet sind. In Abzugsrichtung vor dem zweiten Schweißkopf 13 ist eine Formstufe 14 angeordnet, welche die Kanten des Metallbandes 2 gegebenenfalls bis zum Schweißpunkt zusammenhält. Sie entspricht einer zur Formungseinheit 4 gehörenden Formungsstufe 15, welche in Abzugsrichtung vor dem Schweißkopf 12 angebracht ist.

Jeder der Schweißköpfe 12 und 13 kann mit nur einer Elektrode ausgerüstet sein. Es können aber auch zwei oder mehr Elektroden eingesetzt sein, die in jedem der Schweißköpfe auf die gleiche Schweißstelle gerichtet sind. Ein mit zwei Elektroden arbeitender Schweißkopf geht beispielsweise aus der weiter oben erwähnten EP 1 604 768 B1 hervor. Ein drei Elektroden aufweisender Schweißkopf ist beispielsweise in der DE-A- 2 256 851 beschrieben.

Wenn aus Sicherheitsgründen in einer weiteren Ausführungsform der Schweißeinrichtung ein dritter Schweißkopf eingesetzt wird, dann wird vor demselben vorzugsweise ebenfalls eine der Formstufe 14 entsprechende Formstufe angeordnet.

Die Vorrichtung nach Fig. 1 arbeitet beispielsweise wie folgt:
Nach Einschalten aller erforderlichen Aggregate der Vorrichtung wird das Metallband 2 von der Spule 1 abgezogen und in der Formungseinheit 4 zu dem Rohr 5 mit noch offenem Schlitz 6 geformt. Das Wort "offen" bedeutet dabei, daß der Schlitz 6 noch nicht durch eine Schweißnaht verschlossen ist. Die beiden Kanten des Metallbandes 2 sind aber so gebogen, daß sie sich am Schlitz 6 auf jeden Fall berühren, und zwar vorzugsweise auf Stoß. Durch den zunächst aktiven Schweißkopf 12 wird anschließend - unabhängig von der Anzahl seiner Elektroden - der Schlitz 6 des Rohres 5 verschweißt, so daß das durch die Schweißnaht 8 verschlossene Rohr 9 erhalten wird. Der Schweißkopf 12 bleibt solange eingeschaltet, bis seine Elektrode abgenutzt ist und durch eine neue Elektrode ersetzt werden muß. Das Wort "Elektrode" steht stellvertretend auch für "Elektroden", wenn pro Schweißkopf mehr als eine Elektrode eingesetzt ist. Rechtzeitig bevor die Elektrode des Schweißkopfes 12 ausgetauscht werden muß, wird der Schweißkopf 13 eingeschaltet, der dann ebenfalls eine Schweißnaht erzeugt. Die Schweißnaht 8 wird dabei bis zur Abschaltung des Schweißkopfes 12 gegebenenfalls doppelt ausgeführt.

Wenn der Schweißkopf 12 abgeschaltet ist, kann seine Elektrode durch eine neue Elektrode ersetzt werden, so daß der Schweißkopf 12 wieder einsatzfähig ist. Er wird dann - analog zur geschilderten Verfahrensweise - rechtzeitig wieder eingeschaltet, wenn die Elektrode des Schweißkopfes 13 abgenutzt ist und ausgetauscht werden muß. In dem geschilderten Sinne ist wechselweise jeweils einer der Schweißköpfe 12 oder 13 aktiv, so daß eine kontinuierliche Fertigung des durch eine Schweißnaht 8 verschlossenen Rohres 9 auch für sehr große Längen möglich ist.

Bei ungestörtem Betrieb wird das Rohr 9 also kontinuierlich durch eine Schweißnaht 8 verschlossen, die dann auch doppelt ausgeführt ist, wenn beide Schweißköpfe 12 und 13 über eine kurze Zeitspanne gleichzeitig eingeschaltet sind. Für den Fall, daß der Schweißkopf 12 etwas zu früh abgeschaltet wird, bevor der Schweißkopf 13 vollständig aktiviert ist, werden die Kanten des Metallbandes 2 am dann noch "offenen" Schlitz 6 durch die Formstufe 14 so zusammengehalten, daß der Schweißkopf 13 eine einwandfreie Schweißnaht 8 erzeugen kann.

## Patentansprüche

1. Vorrichtung zur kontinuierlichen Herstellung von Rohren aus Metall, welche eine Formungseinheit zum Formen eines Rohres mit einem in Längsrichtung verlaufenden Schlitz aus einem längseinlaufenden Metallband, eine Schweißeinrichtung zum Verschweißen der am Schlitz des Rohres aneinander liegenden Kanten des Metallbandes und eine Abzugseinrichtung zum Ziehen des nach dem Schweißen rundum geschlossenen Rohres in seiner Längsrichtung aufweist, **dadurch gekennzeichnet, daß** die Schweißeinrichtung (7) aus mindestens zwei getrennten, in Abzugsrichtung des Rohres (9) mit Abstand zueinander angeordneten Schweißköpfen (12,13) mit jeweils mindestens einer nicht abbrennenden Elektrode besteht.

2. Vorrichtung nach Anspruch 1, **dadurch gekennzeichnet, daß** vor dem in Abzugsrichtung des Rohres (9) hinter dem ersten Schweißkopf (12) angeordneten Schweißkopf (13) eine die am Schlitz (6) des Rohres liegenden Kanten des Metallbandes (2) des gegebenenfalls noch offenen Rohres zusammenhaltende Formstufe (14) angeordnet ist.
